# EUROPEAN PATENT APPLICATION

(11) **EP 4 238 790 A1**
(43) Date of publication of application: **06.09.2023**
(21) Application number: 23159249.4
(22) Date of filing: 28.02.2023
(51) Int. Cl.: B60H 1/00, B60H 1/32

(54) **TRANSPORT REFRIGERATION SYSTEM POWERED BY A FUEL CELL**

(30) Priority: 01.03.2022 US 202263315172 P
(71) Applicant: Carrier Corporation, Palm Beach Gardens, FL 33418 (US)
(72) Inventor: OGGIANU, Stella Maris, Palm Beach Gardens, 33418 (US); MAKWINSKI, Mark, Palm Beach Gardens, 33418 (US); VAN HASSEL, Bart Antonie, Palm Beach Gardens, 33418 (US); PETERSON, Eric C., Palm Beach Gardens, 33418 (US)
(74) Representative: Dehns

(57) **Abstract**

A transport refrigeration system (200) including a transport refrigeration unit (22) configured to provide conditioned air to a refrigerated cargo space (119) of a transport container (106), a fuel cell (400) configured to provide electricity to the transport refrigeration unit (22), and a supervisory management module configured to control operation of the transport refrigeration unit (22) and the fuel cell (400).

## Description

### REFRIGERATION UNITS

The embodiments herein generally relate to transport refrigeration and more specifically, the energy source of transport refrigeration units.

Refrigerated vehicles and trailers are commonly used to transport perishable goods. A transport refrigeration unit is commonly mounted to the vehicles or to the trailer in operative association with a cargo space defined within the vehicles or trailer for maintaining a controlled temperature and environment within the cargo space.

Conventionally, transport refrigeration units used in connection with refrigerated vehicles and refrigerated trailers include a refrigerant compressor, a condenser with one or more associated condenser fans, an expansion device, and an evaporator with one or more associated evaporator fans, which are connected via appropriate refrigerant lines in a closed refrigerant flow circuit. Air is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On many commercially available transport refrigeration units the compressor, the fans, the controllers and typically other components of the transport refrigeration unit, are powered during transit by a prime mover, either through a direct mechanical coupling or a belt drive. Alternatively, the transport refrigeration unit may be electrically powered (e.g., using an alternating (AC) synchronous generator that generates AC power). The generated AC power is typically used to power an electric motor for driving the refrigerant compressor, and other components of the transport refrigeration unit. In a different electrically powered transport refrigeration unit, the AC generator may be replaced with a battery pack coupled to a power inverter to provide power to the loads. The battery pack is a finite source of power. Accordingly, additional methods of providing clean power for a transport refrigeration unit is desired.

According to a first aspect of the present invention, a transport refrigeration system is provided. The transport refrigeration system includes: a transport refrigeration unit configured to provide conditioned air to a refrigerated cargo space of a transport container; a fuel cell configured to provide electricity to the transport refrigeration unit; and a supervisory management module configured to control operation of the transport refrigeration unit and the fuel cell.

The power management may be configured to control operation of the transport refrigeration unit and the fuel cell based on at least one of fuel cell parameters from the fuel cell or refrigeration parameters from the transport refrigeration unit.

The supervisory management module may be a hardware component that is in electronic communication with the fuel cell and the transport refrigeration unit through a wired or wireless connection.

The supervisory management module may be a software module that is installed on the transport refrigeration unit.

The supervisory management module may be a software module that is installed on the fuel cell.

The transport refrigeration system may include an energy storage device configured to store the electricity from the fuel cell and provide the electricity to the transport refrigeration unit, wherein the supervisory management module is configured to control the electricity sent from the fuel cell to the energy storage device and the electricity sent from the energy storage device to the transport refrigeration unit.

The transport refrigeration system may include a fuel tank configured to store fuel and provide the fuel to the fuel cell, wherein the supervisory management module is configured to control a mass flow or pressure of the fuel from the fuel tank to the fuel cell.

The power management may be configured to control operation of the transport refrigeration unit, the fuel cell, and the fuel tank, based on at least one of fuel cell parameters from the fuel cell, refrigeration parameters from the transport refrigeration unit, and fuel tank parameters from the fuel tank.

According to a second aspect of the present invention, a method of operating a transport refrigeration system is provided. The method includes: providing conditioned air to a refrigerated cargo space of a transport container using a transport refrigeration unit; providing electricity to the transport refrigeration unit using a fuel cell; and controlling operation of the transport refrigeration unit and the fuel cell using a supervisory management module.

Controlling operation of the transport refrigeration unit and the fuel cell using the supervisory management module may further include: controlling operation of the transport refrigeration unit and the fuel cell using a supervisory management module based on at least one of fuel cell parameters from the fuel cell or refrigeration parameters from the transport refrigeration unit.

The method may include transmitting commands from the supervisory management module to at least one of the fuel cell and the transport refrigeration unit, wherein the supervisory management module is a hardware component that is in electronic communication with the fuel cell and the transport refrigeration unit through a wired or wireless connection.

The method may include transmitting commands from the supervisory management module installed on the transport refrigeration unit to the fuel cell, wherein the supervisory management module is a software module that is installed on the transport refrigeration unit.

The method may include transmitting commands from the supervisory management module installed on the fuel cell to the transport refrigeration unit, wherein the supervisory management module is a software module that is installed on the fuel cell.

The method may include storing the electricity from the fuel cell and providing the electricity to the transport refrigeration unit using an energy storage device; and controlling, using the supervisory management module, the electricity sent from the fuel cell to the energy storage device and the electricity sent from the energy storage device to the transport refrigeration unit.

The method may include storing fuel and providing the fuel to the fuel cell using a fuel tank; and controlling, using the supervisory management module, a mass flow and a pressure of the fuel from the fuel tank to the fuel cell.

The method may include controlling, using the supervisory management module, operation of the transport refrigeration unit, the fuel cell, and the fuel tank, based on at least one of fuel cell parameters from the fuel cell, refrigeration parameters from the transport refrigeration unit, and fuel tank parameters from the fuel tank.

According to a third aspect of the present invention, a computer program product tangibly embodied on a non-transitory computer readable medium is provided. The computer program product includes instructions that, when executed by a processor, cause the processor to perform operations including: providing conditioned air to a refrigerated cargo space of a transport container using a transport refrigeration unit; providing electricity to the transport refrigeration unit using a fuel cell; and controlling operation of the transport refrigeration unit and the fuel cell using a supervisory management module.

Controlling operation of the transport refrigeration unit and the fuel cell using the supervisory management module may further include: controlling operation of the transport refrigeration unit and the fuel cell using a supervisory management module based on at least one of fuel cell parameters from the fuel cell or refrigeration parameters from the transport refrigeration unit.

The operations may further include: transmitting commands from the supervisory management module to at least one of the fuel cell and the transport refrigeration unit, wherein the supervisory management module is a hardware component that is in electronic communication with the fuel cell and the transport refrigeration unit through a wired or wireless connection.

The operations may further include: transmitting commands from the supervisory management module installed on the transport refrigeration unit to the fuel cell, wherein the supervisory management module is a software module that is installed on the transport refrigeration unit.

Technical effects of embodiments of the present invention include powering a transport refrigeration unit with a fuel cell and controlling operation of the fuel cell and the transport refrigeration unit using a supervisory management module that is a separate component or software installed on the fuel cell, transport refrigeration unit, or any other controller existing in one of the elements of the transport refrigeration unit.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

A detailed description of one or more embodiments are presented herein by way of exemplification and not limitation with reference to the Figures. The following descriptions should not be considered limiting in any way. With reference to the accompanying drawings, like elements are numbered alike:
FIG. 1 is a schematic illustration of an exemplary transport refrigeration system;
FIG. 2 is an enlarged schematic illustration of an exemplary transport refrigeration unit of the transport refrigeration system of FIG. 1;
FIG. 3 is a block diagram of power management system for the transport refrigeration system of FIGS. 1 and 2;
FIG. 4 is a block diagram of power management system for the transport refrigeration system of FIGS. 1 and 2;
FIG. 5 is a block diagram of power management system for the transport refrigeration system of FIGS. 1 and 2; and
FIG. 6 is a flow process illustrating an exemplary method of operating the transport refrigeration system of FIGS. 1 and 2.

Embodiments disclosed herein relate to powering a transport refrigeration unit with a fuel cell and controlling operation of the transport refrigeration unit and the fuel cell using a supervisory management module that is a separate hardware device or software installed on the fuel cell or transport refrigeration unit.

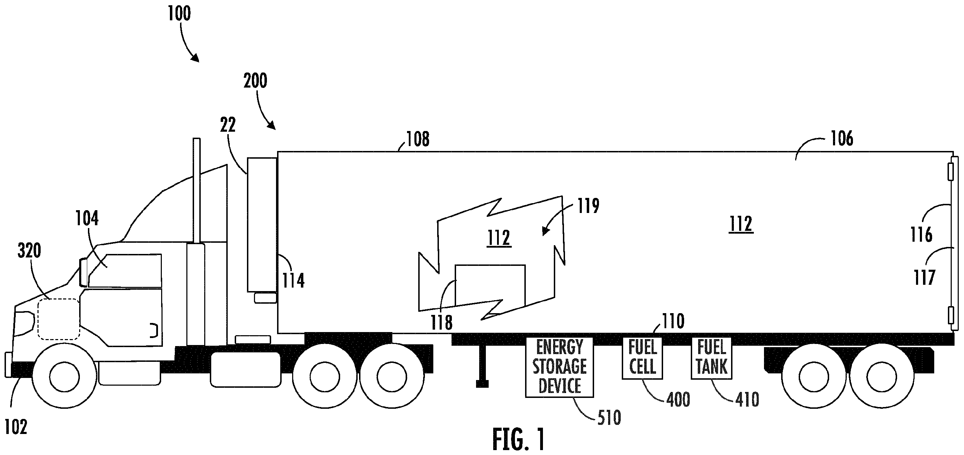

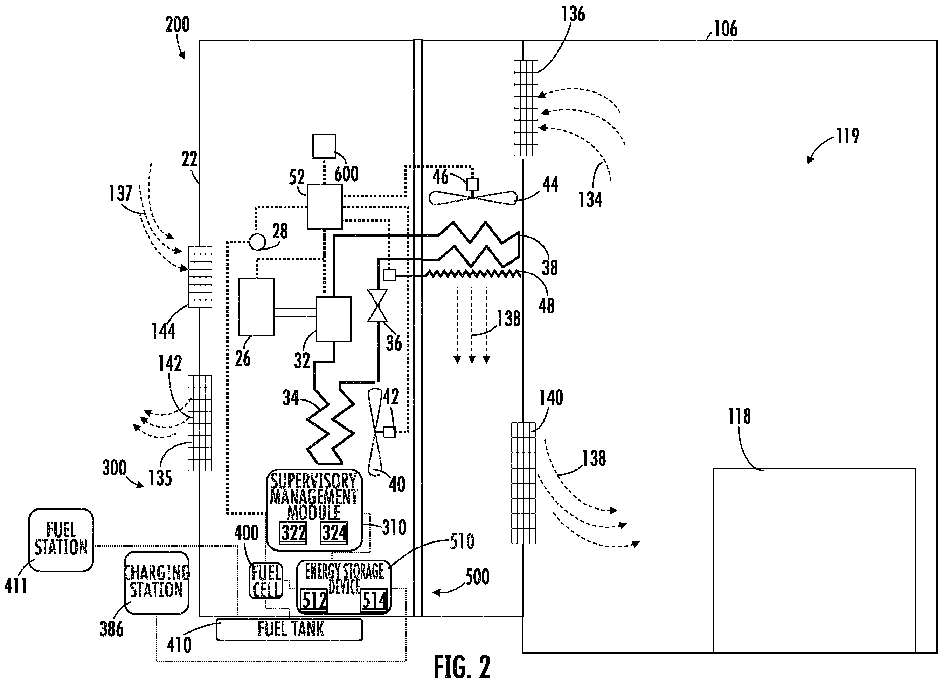

FIG. 1 shows a schematic illustration of a transport refrigeration system 200. FIG. 2 shows an enlarged schematic illustration of the transport refrigeration system 200 of FIG. 1.

The transport refrigeration system 200 is being illustrated as a trailer system 100, as seen in FIG. 1. The trailer system 100 includes a vehicle 102 integrally connected to a transport container 106. The vehicle 102 includes an operator's compartment or cab 104 and a propulsion motor 320 which acts as the drive system of the trailer system 100. The propulsion motor 320 is configured to power the vehicle 102. The energy source that powers the propulsion motor 320 may be at least one of compressed natural gas, liquefied natural gas, gasoline, electricity, diesel, hydrogen, electricity from a fuel cell, a electricity from a hydrogen fueled proton exchange membrane (PEM) fuel cell, electricity from a battery, electricity from a generator, or any combination thereof. The propulsion motor 320 may be an electric motor or a hybrid motor (e.g., a combustion engine and an electric motor). The transport container 106 is coupled to the vehicle 102. The transport container 106 may be removably coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. The walls of the transport container 106 define a refrigerated cargo space 119. It is appreciated by those of skill in the art that embodiments described herein may be applied to a tractor-trailer refrigerated system or non-trailer refrigeration such as, for example a rigid truck, a truck having refrigerated compartment, or a shipping container having a refrigerated compartment.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring temperature controlled transport. The transport refrigeration system 200 includes a transport refrigeration unit 22, a refrigerant compression device 32, an electric motor 26 for driving the refrigerant compression device 32, and a controller 600. The transport refrigeration unit 22 is in operative association with the refrigerated cargo space 119 and is configured to provide conditioned air to the transport container 106. The transport refrigeration unit 22 functions under the control of the controller 600, to establish and regulate a desired environmental parameters, such as, for example temperature, pressure, humidity, carbon dioxide, oxygen, ethylene, ozone, light exposure, vibration exposure, and other conditions in the refrigerated cargo space 119, as known to one of ordinary skill in the art. In an embodiment, the transport refrigeration unit 22 is capable of providing a desired temperature, carbon dioxide, and humidity range. The refrigerated cargo space 119 may be subdivided into one or more sub-spaces and the transport refrigeration unit 22 may be able to maintain a different temperature in each sub-space.

The transport refrigeration unit 22 includes a refrigerant compression device 32, a refrigerant heat rejection heat exchanger 34 (condenser), an expansion device 36, and a refrigerant heat absorption heat exchanger 38 (evaporator) connected in refrigerant flow communication in a closed loop refrigerant circuit and arranged in a conventional refrigeration cycle. The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. The heater 48 may be an electric resistance heater. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air intake 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat absorption heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo space 119 of the transport container 106 by means of the transport refrigeration unit 22. A return airflow 134 flows into the transport refrigeration unit 22 from the refrigerated cargo space 119 through the transport refrigeration unit return air intake 136, and across the refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo space 119 of the transport container 106 through the transport refrigeration unit outlet 140. Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The supply airflow 138 may cool the perishable goods 118 in the refrigerated cargo space 119 of the transport container 106. It is to be appreciated that the transport refrigeration unit 22 can further be operated in reverse to warm the transport container 106 when, for example, the outside temperature is very low. In the illustrated transport refrigeration system 200, the return air intake 136, the transport refrigeration unit outlet 140, the heat outlet 142, and the external air inlet 144 are configured as grilles to help prevent foreign objects from entering the transport refrigeration unit 22.

The transport refrigeration system 200 also includes a controller 600 configured for controlling the operation of the transport refrigeration system 200 including, but not limited to, the operation of various components of the refrigerant unit 22 to provide and maintain a desired thermal environment within the refrigerated cargo space 119. The controller 600 may also be able to selectively operate the electric motor 26. The controller 600 may also be configured to provide a feedforward signal to the fuel cell 400 so that it will start up before the transport refrigeration unit 22 places a load on the fuel cell 400.

The controller 600 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium. The controller 600 may have multiple inputs (e.g. analog, digital, others) and multiple outputs and a communication interface (e.g. CAN-bus, ethernet).

The transport refrigeration unit 22 is powered by a fuel cell 400 and/or an energy storage device 510. The fuel cell 400, associated fuel tanks 410, and energy storage device 510 may be attached to the trailer system 100. The fuel cell 400, associated fuel tanks 410, and energy storage device 510 may be attached to a bottom of the trailer system 100 (or within the housing of the transport refrigeration unit 22).

The fuel cell 400 may include an anode electrode and a cathode electrode separated by an electrolyte (not shown for simplicity). A reducing fluid such as hydrogen is supplied to the anode electrode, and an oxidant such as oxygen or air is supplied to the cathode electrode. In a cell utilizing a PEM as the electrolyte, the hydrogen electrochemically reacts at a catalyst surface of the anode electrode to produce hydrogen ions and electrons. The electrons are conducted to an external load circuit (e.g., the transport refrigeration unit 22 or energy storage device 510) and then returned to the cathode electrode, while the hydrogen ions transfer through the electrolyte to the cathode electrode, where they react with the oxidant and electrons to produce water and release thermal energy. A fuel tank 410 is configured to store and provide the reducing fluid to the fuel cell 400. The reducing fluid may be hydrogen. The fuel tank 410 may be refilled with fuel at a fuel station 411.

There may be one or more fuel cells 400 and one or more fuel tanks 410. The fuel cell 400 and/or the fuel tank 410 may be located inside the transport refrigeration unit 22, as shown in FIG. 2. Alternatively, the fuel cell 400 and/or the fuel tank 410 may be located outside of the transport refrigeration unit 22. The fuel cell 400 and/or the fuel tank 410 may be located under the transport container 106 of the trailer system 100.

The energy storage device 510 may be located outside of the transport refrigeration unit 22, as shown in FIG. 1. Alternatively, the energy storage device 510 may be located within the transport refrigeration unit 22. The fuel cell 400 may power the transport refrigeration unit 22 directly or may provide electricity to the energy storage device 510, which then provides power to the transport refrigeration unit 22. The transport refrigeration unit 22 may be powered by one or more components simultaneously. For example, the transport refrigeration unit 22 may be simultaneously powered by the fuel cell 400, the energy storage device 510, and/or an external power source.

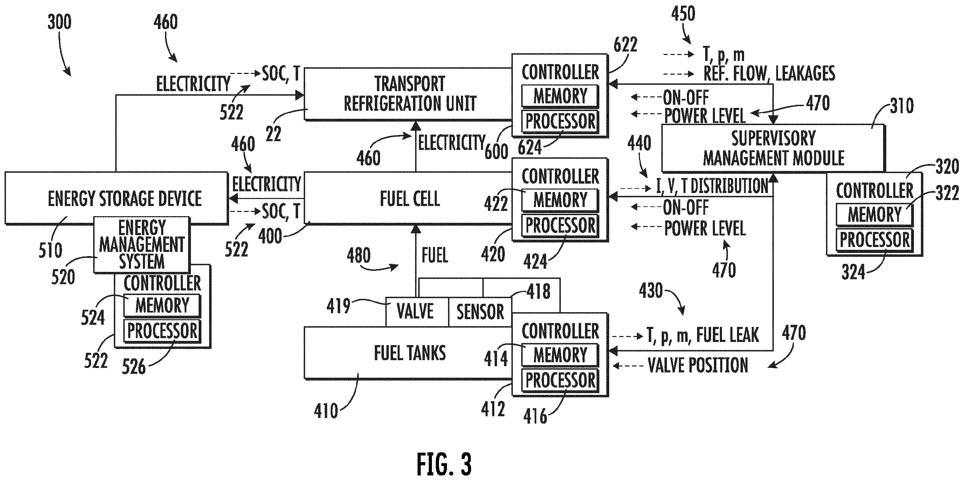

The energy storage device 510 may include a battery system 512, a capacitor 514, and/or any other electricity storage system known to one of skill in the art. The battery system 512 may comprise, chemical batteries, lithium-ion batteries, solid state batteries, flow batteries, or any other type of battery known to one of skill in the art. The battery system 512 may employ multiple batteries organized into battery banks. The capacitor 514 may be an electrolytic capacitor, a mica capacitor, a paper capacitor a film capacitor, a non-polarized capacitor, a ceramic capacitor, or any type of capacitor known to one of skill in the art. The battery system 512 may also include a battery management module for communication with the controller 600, a controller 420 of the fuel cell (see FIGS. 3-5), a controller 412 of the fuel tank 410 (see FIGS. 3-5), or a controller 520 of the energy management system 520 (see FIGS. 3-5). The battery system 512 may also include a thermal management system for health and safety

The energy storage device 510 may be charged by a stationary charging station 386 such as, for example a three-phase 460Vac (60Hz) or 400Vac (50Hz) power outlet. The charging station 386 may provide single phase (e.g., level 2 charging capability) or three phase AC power to the energy storage device 510. It is understood that the charging station 386 may have any phase charging and embodiments disclosed herein are not limited to single phase or three phase AC power. The single phase AC power may be a high voltage DC power, such as, for example, 500VDC. One function of the charging station 386 is to balance the cell voltage of individual cells of the battery system at some regular cadence.

The transport refrigeration unit 22 has a plurality of electrical power demand loads on the energy storage device 510 and the fuel cell 400, including, but not limited to, the electric motor 26 for the compression device 32, the drive motor 42 for the fan 40 associated with the refrigerant heat rejection heat exchanger 34, and the drive motor 46 for the fan 44 associated with the refrigerant heat absorption heat exchanger 38. As each of the fan motors 42, 46 and the electric motor 26 may be an AC motor or a DC motor, it is to be understood that various power converters 52, such as AC to DC rectifiers, DC to AC inverters, AC to AC voltage/frequency converters, DC to DC voltage converters, and filters, may be employed in connection with the energy storage device 510 as appropriate. In the depicted transport refrigeration system 200, the heater 48 also constitutes an electrical power demand load. The electric resistance heater 48 may be selectively operated by the controller 600 whenever a control temperature within the temperature controlled cargo box drops below a preset lower temperature limit, which may occur in a cold ambient environment. In such an event the controller 600 would activate the heater 48 to heat air circulated over the heater 48 by the fan(s) 44 associated with the refrigerant heat absorption heat exchanger 38. The heater 48 may also be used to de-ice the return air intake 136. Additionally, the electric motor 26 being used to power the refrigerant compression device 32 constitutes a demand load. The refrigerant compression device 32 may comprise a single-stage or multiple-stage compressor such as, for example, a reciprocating compressor or a scroll compressor. The transport refrigeration system 200 may also include a voltage sensor 28 to sense the voltage coming into the transport refrigeration unit 22.

The power demand loads of the transport refrigeration unit 22 may be managed and fulfilled by a power system 500. The power system 500 may include the fuel cell 400 and/or the energy storage device 510. The power system 500 includes a supervisory management module 310 that is in communication with transport refrigeration unit 22, the fuel cell 400 and/or the one or more supplemental power sources 500.

The supervisory management module 310 is configured to control the electricity provided to the transport refrigeration unit 22 from the fuel cell 400 and/or the energy storage device 510. The supervisory management module 310 may be incorporated as software within the controller 600 of the transport refrigeration unit 22 or a controller of the fuel cell 400, or may be a separate electronic controller as further described herein. The supervisory management module 310 may also be configured to perform thermal management and sequencing of start-up and cool-downs.

Referring now to FIG. 3, with continued reference to FIGS. 1 and 2, a block diagram of the power system 300 is illustrated. As aforementioned, the power system 500 for the transportation unit 22 is composed of the fuel cell 400, the energy storage device 510, and the supervisory management module 310. The controllers 600, 420, 412, 522, and 320 may communicate across a CAN-bus.

As illustrated in FIG. 3, the supervisory management module 310 may be a standalone and separate hardware component of the power system 500. The supervisory management module 310 may be electronically connected to the controller 600 of the transport refrigeration unit 22 through a wired or wireless connection. The supervisory management module 310 may be electronically connected to a controller 420 of the fuel cell 400 through a wired or wireless connection. The supervisory management module 310 may be electronically connected to a controller 412 of the fuel tank 410 through a wired or wireless connection.

The supervisory management module 310 may include a controller 320 The controller 320 may be an electronic controller including a processor 324 and an associated memory 322 comprising computer-executable instructions (i.e., computer program product) that, when executed by the processor 324, cause the processor 324 to perform various operations. The processor 324 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 322 may be but is not limited to a random access memory (RAM), read only memory (ROM), or other electronic, optical, magnetic or any other computer readable medium. The controller 600 may have multiple inputs (e.g. analog, digital, others) and multiple outputs and a communication interface (e.g. CAN-bus, ethernet).

The controller 600 of the transport refrigeration unit 22 may be an electronic controller including a processor 624 and an associated memory 622 comprising computer-executable instructions (i.e., computer program product) that, when executed by the processor 624, cause the processor 624 to perform various operations. The processor 624 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 622 may be but is not limited to a random access memory (RAM), read only memory (ROM), or other electronic, optical, magnetic or any other computer readable medium.

The controller 600 of the transport refrigeration unit 22 is configured to detect refrigeration parameters 450 and transmit the refrigeration parameters 450 to the supervisory management module 310. The refrigeration parameter 450 may include, but are not limited to, temperature (T), pressure (p), mass flow (ṁ) of refrigerant, leakages, or any other measurable parameter known to one of skill in the art. Other parameters are power level, current and/or voltage to compressors, fans, and other internal components within 22. The controller 600 may comprise a power network controller (PNC) with an Overload Ground Fault (OGF), Phase Reversal Module (PRM) and a Current Transformer (CT).

The controller 420 of the fuel cell 400 may be an electronic controller including a processor 424 and an associated memory 422 comprising computer-executable instructions (i.e., computer program product) that, when executed by the processor 424, cause the processor 424 to perform various operations. The processor 424 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 422 may be but is not limited to a random access memory (RAM), read only memory (ROM), or other electronic, optical, magnetic or any other computer readable medium.

The controller 600 may provide a feedforward signal to controller 320 of the supervisory management module 310 so that the supervisory management module 310 can tell the controller 420 of the fuel cell 400 to start up

The controller 420 of the fuel cell 400 is configured to detect fuel cell parameters 440 and transmit the fuel cell parameters 440 to the supervisory management module 310. The fuel cell parameter 440 may include, but are not limited to, currents (I), voltage (V), fuel inlet pressure, air mass flow rate, coolant temperature, and temperature (T) distribution of the fuel cell 400.

The controller 412 of the fuel tank 410 may be an electronic controller including a processor 416 and an associated memory 414 comprising computer-executable instructions (i.e., computer program product) that, when executed by the processor 416, cause the processor 416 to perform various operations. The processor 416 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 414 may be but is not limited to a random access memory (RAM), read only memory (ROM), or other electronic, optical, magnetic or any other computer readable medium.

Alternatively, the supervisory management module 310 may replace the controller 412 of the fuel tank 410 and may be configured to control the fuel tank 410. Alternatively, the functions of the controller 412 of the fuel tank 410 are incorporated in the controller 420 of the fuel cell 400.

The controller 412 of the fuel tank 410 is in communication with a valve 419 of the fuel tank 410 and one or more sensors 418 of the fuel tank 410. The valve 419 is an adjustable on/off valve configured to control the flow of fuel 480 from the fuel tank to the fuel cell 400. The fuel tank 410 includes safety valves. The fuel tank 410 may include a pressure regulator that controls inlet pressure to the fuel system. The supervisory management module 310 is configured to control a mass flow and/or a pressure of fuel from the fuel tank 410.

The sensor 418 may be configured to detect fuel tank parameters 430 of the fuel 480 within the fuel tank 410, the fuel 480 leaving the fuel tank 410, and the valve position. The sensor 418 may be configured to detect fuel tank parameters 430 including, but not limited to, a temperature (T) and pressure (p) of fuel 480 within the fuel tank 410 or leaving the fuel tank 410. The sensor 418 may also be configured to detect fuel tank parameters 430 including, but not limited to, a mass flow rate (m) of fuel 480 leaving the fuel tank 410 or of fuel 480 refilling the fuel tank 410, an opening of the valve 419, or a fuel leak. As aforementioned, the fuel may be hydrogen (H2). The controller 412 of the fuel tank 410 is configured to transmit these fuel tank parameters 430 to the supervisory management module 310.

The energy storage device 510 may include an energy management system 520 configured to control charging and discharge of the energy storage device 510. The energy management system 520 may be a battery management system, or a capacitor management system. The energy management system 520 may include a controller 522. The controller 522 may be an electronic controller including a processor 526 and an associated memory 524 comprising computer-executable instructions (i.e., computer program product) that, when executed by the processor 526, cause the processor 526 to perform various operations. The processor 526 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 524 may be but is not limited to a random access memory (RAM), read only memory (ROM), or other electronic, optical, magnetic or any other computer readable medium.

The controller 522 of the energy management system 520 is configured to detect energy storage parameters 522 and transmit the energy storage parameters 522 to the supervisory management module 310.

The supervisory management module 310 may be configured to control operation of the transport refrigeration unit 22, fuel cell 400, fuel tanks 410, and/or energy storage device 510 based on the fuel tank parameters 430, the fuel cell parameters 440, refrigeration parameters 450, and/or energy storage parameters 522. Additional parameters that may be considered include but are not limited to weather, load forecasts, and/or starts and stops. For example, the supervisory management module 310 may adjust a position of the valve 419 based on the fuel tank parameters 430, the fuel cell parameters 440, refrigeration parameters 450, and/or energy storage parameters 522. In another example, the supervisory management module 310 may adjust electricity 460 sent from the fuel cell 400 to the transport refrigeration unit 22 and/or the energy storage device 510 based on the fuel tank parameters 430, the fuel cell parameters 440, refrigeration parameters 450, and/or energy storage parameters 522. In another example, the supervisory management module 310 may adjust electricity 460 sent from the fuel cell 400 and/or the energy storage device 510 to the transport refrigeration unit 22 based on the fuel tank parameters 430, the fuel cell parameters 440, refrigeration parameters 450, and/or energy storage parameters 522. In another example, the controller 600 may provide a feedforward signal to controller 320 of the supervisory management module 310 so that the supervisory management module 310 can tell the controller 420 of the fuel cell 400 to start up based on the fuel tank parameters 430, the fuel cell parameters 440, refrigeration parameters 450, and/or energy storage parameters 522. In another example, the supervisory management module 310 may decide to operate the fuel cell 400 to charge the energy storage devices during times that the transport refrigeration unit 22 is not operating so that the energy storage device 510 can be kept at a certain state of charge that is beneficial to the overall system based on the fuel tank parameters 430, the fuel cell parameters 440, refrigeration parameters 450, and/or energy storage parameters 522.

The supervisory management module 310 may provide a limited, or derated refrigeration output in response to conditions outside of the rated operating range of the equipment. For example if the ambient temperature exceeds a maximum allowed (e.g., designed for) value then reduced cooling may be called for to prevent overload of the system. Similarly, if out of specification equipment performance parameters are detected the controller may default to a "limp home" mode to prevent further damage.

In another example, the supervisory management module 310 may be configured to command the fuel cell 400 to remain off when the fuel tanks 410 are being refilled based on the fuel tank parameters 430, the fuel cell parameters 440, refrigeration parameters 450, and/or energy storage parameters 522. If the transport refrigeration unit 22 requires power to maintain temperature during refueling of the fuel tanks 410 then the transport refrigeration unit 22 may obtain power from the energy storage device 510. In another example, the supervisory management module 310 may be configured to control the recharging of the energy storage device from a charge station 386 based on the fuel tank parameters 430, the fuel cell parameters 440, refrigeration parameters 450, and/or energy storage parameters 522.

The supervisory management module 310 may be configured to transmit commands 470 to control operation of the transport refrigeration unit 22, fuel cell 400, fuel tanks 410, and/or energy storage device 510 based on the fuel tank parameters 430, the fuel cell parameters 440, refrigeration parameters 450, and/or energy storage parameters 522. The commands 470 may include On-Off commands to the transport refrigeration unit 22 that turn on or shut off the transport refrigeration unit 22. The commands 470 may include power level commands from the controller 420 of the fuel cell 400 that depicts how much power is available from the fuel cell 400 and the controller 600 of the transport refrigeration unit 22 adjusts the electricity 460 being pulled by the transport refrigeration unit 22. The commands 470 may include On-Off commands to the fuel cell 400 that turn on or shut off the fuel cell 400. The supervisory management module 310 may receive information from the fuel cell 400 about up to how much power can be withdrawn from the fuel cell 400 and the fuel cell 400 may be configured to shut down when the transport refrigeration unit 22 is putting too much of a load on it. The commands 470 may include a valve position command to the fuel tank 410 that adjusts a position of the valve 419 of the fuel tank 410.

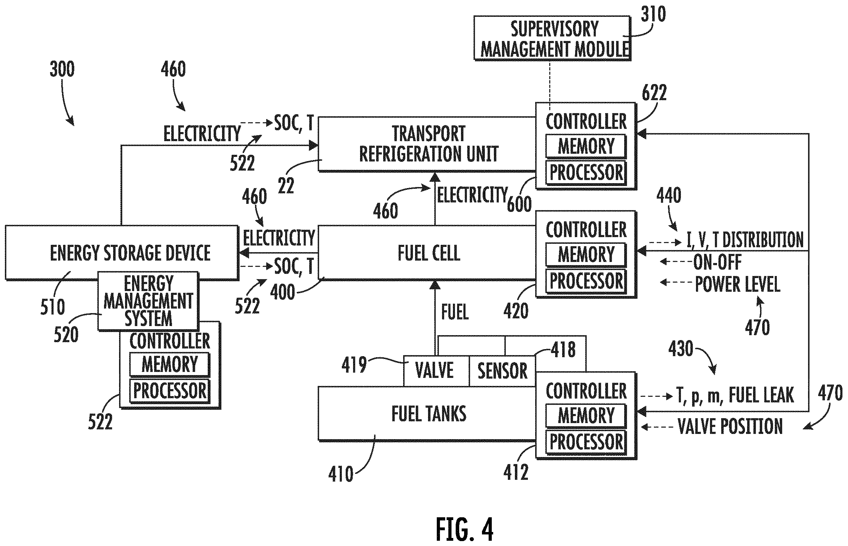

Referring now to FIG. 4, with continued reference to FIGS. 1 and 2, a block diagram of the power system 300 is illustrated. As aforementioned, the power system 300 for the transportation unit 22 is composed of the fuel cell 400, the energy storage device 510, and the supervisory management module 310. The controllers 600, 420, 412, and 522 may communicate across a CAN-bus.

As illustrated in FIG. 4, the supervisory management module 310 may be a software module (e.g., software code or algorithm) installed on the memory 622 within controller 600 of the transport refrigeration unit 22. The controller 600 of the transport refrigeration unit 22 may be electronically connected to a controller 420 of the fuel cell 400 through a wired or wireless connection. The controller 600 of the transport refrigeration unit 22 may be electronically connected to a controller 412 of the fuel tank 410 through a wired or wireless connection. The controller 600 of the transport refrigeration unit 22 may be electronically connected to a controller 522 of the energy storage device 510 through a wired or wireless connection.

The controller 600 of the transport refrigeration unit 22 is configured to detect the refrigeration parameters 450 and provide the refrigeration parameters 450 to the supervisory management module 310. The controller 420 of the fuel cell 400 is configured to detect fuel cell parameters 440 and transmit the fuel cell parameters 440 to the supervisory management module 310 installed on the transport refrigeration unit 22. The controller 412 of the fuel tank 410 is configured to detect fuel tank parameters 430 and transmit the fuel tank parameters 430 to the supervisory management module 310 installed on the transport refrigeration unit 22. The controller 522 of the energy management system 520 is configured to detect energy storage parameters 522 and transmit the energy storage parameters 522 to the supervisory management module 310 installed on the transport refrigeration unit 22.

The supervisory management module 310 installed on the controller 600 of the transport refrigeration unit 22 may be configured to control operation of the transport refrigeration unit 22, fuel cell 400, fuel tanks 410, and/or energy storage device 510 based on the fuel tank parameters 430, the fuel cell parameters 440, refrigeration parameters 450, and/or energy storage parameters 522. Additional parameters that may be considered include but are not limited to weather, load forecasts, door openings, and/or starts and stops. For example, the supervisory management module 310 may adjust a position of the valve 419 based on the fuel tank parameters 430, the fuel cell parameters 440, refrigeration parameters 450, and/or energy storage parameters 522. In another example, the supervisory management module 310 may adjust electricity 460 sent from the fuel cell 400 to the transport refrigeration unit 22 and/or the energy storage device 510 based on the fuel tank parameters 430, the fuel cell parameters 440, refrigeration parameters 450, and/or energy storage parameters 522. In another example, the supervisory management module 310 may adjust electricity 460 sent from the fuel cell 400 and/or the energy storage device 510 to the transport refrigeration unit 22 based on the fuel tank parameters 430, the fuel cell parameters 440, refrigeration parameters 450, and/or energy storage parameters 522. In another example, the controller 600 may provide a feedforward signal to the supervisory management module 310 so that the supervisory management module 310 can tell the controller 420 of the fuel cell 400 to start up based on the fuel tank parameters 430, the fuel cell parameters 440, refrigeration parameters 450, and/or energy storage parameters 522. In another example, the supervisory management module 310 may decide to operate the fuel cell 400 to charge the energy storage devices during times that the transport refrigeration unit 22 is not operating so that the energy storage device 510 can be kept at a certain state of charge that is beneficial to the overall system based on the fuel tank parameters 430, the fuel cell parameters 440, refrigeration parameters 450, and/or energy storage parameters 522.

In another example, the supervisory management module 310 may be configured to command the fuel cell 400 to remain off when the fuel tanks 410 are being refilled based on the fuel tank parameters 430, the fuel cell parameters 440, refrigeration parameters 450, and/or energy storage parameters 522. If the transport refrigeration unit 22 requires power to maintain temperature during refueling of the fuel tanks 410 then the transport refrigeration unit 22 may obtain power from the energy storage device 510. In another example, the supervisory management module 310 may be configured to control the recharging of the energy storage device from a charge station 386 based on the fuel tank parameters 430, the fuel cell parameters 440, refrigeration parameters 450, and/or energy storage parameters 522. The supervisory management module 310 may be configured to directly control the transport refrigeration unit 22 through commands 470 and transmit commands 470 to control operation of the fuel cell 400, the fuel tanks 410, and/or the energy storage device 510 based on the fuel tank parameters 430, the fuel cell parameters 440, refrigeration parameters 450, and/or energy storage parameters 522. The commands 470 may include On-Off commands to the transport refrigeration unit 22 that turn on or shut off the transport refrigeration unit 22. The commands 470 may include power level commands from the controller 420 of the fuel cell 400 that depicts how much power is available from the fuel cell 400 and the controller 600 of the transport refrigeration unit 22 adjusts the electricity 460 being pulled by the transport refrigeration unit 22. The commands 470 may include On-Off commands to the fuel cell 400 that turn on or shut off the fuel cell 400. The supervisory management module 310 may receive information from the fuel cell 400 about up to how much power can be withdrawn from the fuel cell 400 and the fuel cell 400 may be configured to shut down when the transport refrigeration unit 22 is putting too much of a load on it. The commands 470 may include a valve position command to the fuel tank 410 that adjusts a position of the valve 419 of the fuel tank 410.

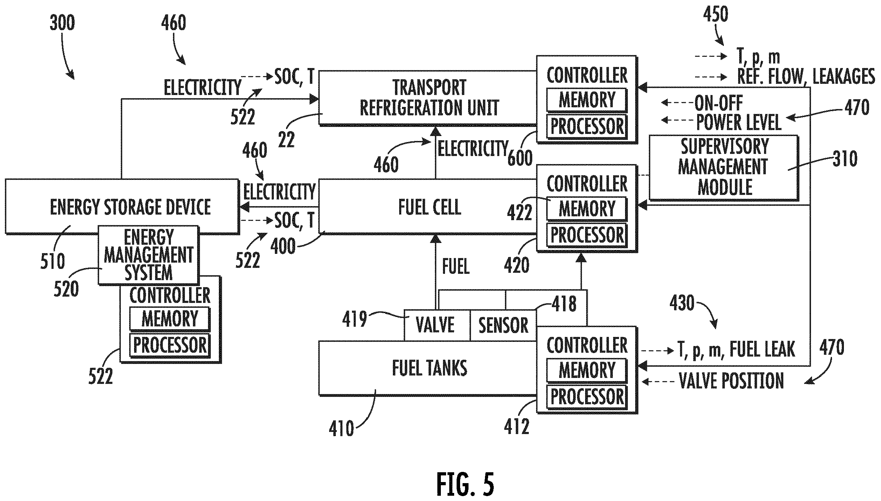

Referring now to FIG. 5, with continued reference to FIGS. 1 and 2, a block diagram of the power system 300 is illustrated. As aforementioned, the power system 300 for the transportation unit 22 is composed of the fuel cell 400, the energy storage device 510, and the supervisory management module 310. The controllers 600, 420, 412, and 522 may communicate across a CAN-bus.

As illustrated in FIG. 5, the supervisory management module 310 may be a software module (e.g., software code or algorithm) installed on the memory 422 within controller 420 of the fuel cell 400. The controller 420 of the fuel cell 400 may be electronically connected to the controller 600 of the transport refrigeration unit 22 through a wired or wireless connection. The controller 420 of the fuel cell 400 may be electronically connected to a controller 412 of the fuel tank 410 through a wired or wireless connection.

The controller 420 of the fuel cell 400 is configured to detect fuel cell parameters 440 and provided the fuel cell parameters 440 to the supervisory management module 310. The controller 600 of the transport refrigeration unit 22 is configured to detect refrigeration parameters 450 and transmit the refrigeration parameters 450 to the supervisory management module 310 installed on the fuel cell 400. The controller 412 of the fuel tank 410 is configured to detect fuel tank parameters 430 and transmit the fuel tank parameters 430 to the supervisory management module 310 installed on the fuel cell 400.

The supervisory management module 310 installed on the controller 420 of the fuel cell 400 may be configured to control operation of the transport refrigeration unit 22, fuel cell 400, fuel tanks 410, and/or energy storage device 510 based on the fuel tank parameters 430, the fuel cell parameters 440, refrigeration parameters 450, and/or energy storage parameters 522. For example, the supervisory management module 310 may adjust a position of the valve 419 based on the fuel tank parameters 430, the fuel cell parameters 440, refrigeration parameters 450, and/or energy storage parameters 522. In another example, the supervisory management module 310 may adjust electricity 460 sent from the fuel cell 400 to the transport refrigeration unit 22 and/or the energy storage device 510 based on the fuel tank parameters 430, the fuel cell parameters 440, refrigeration parameters 450, and/or energy storage parameters 522. In another example, the supervisory management module 310 may adjust electricity 460 sent from the fuel cell 400 and/or the energy storage device 510 to the transport refrigeration unit 22 based on the fuel tank parameters 430, the fuel cell parameters 440, refrigeration parameters 450, and/or energy storage parameters 522. In another example, the controller 600 may provide a feedforward signal to the supervisory management module 310 so that the supervisory management module 310 can tell the controller 420 of the fuel cell 400 to start up based on the fuel tank parameters 430, the fuel cell parameters 440, refrigeration parameters 450, and/or energy storage parameters 522. In another example, the supervisory management module 310 may decide to operate the fuel cell 400 to charge the energy storage devices during times that the transport refrigeration unit 22 is not operating so that the energy storage device 510 can be kept at a certain state of charge that is beneficial to the overall system based on the fuel tank parameters 430, the fuel cell parameters 440, refrigeration parameters 450, and/or energy storage parameters 522.

In another example, the supervisory management module 310 may be configured to command the fuel cell 400 to remain off when the fuel tanks 410 are being refilled based on the fuel tank parameters 430, the fuel cell parameters 440, refrigeration parameters 450, and/or energy storage parameters 522. If the transport refrigeration unit 22 requires power to maintain temperature during refueling of the fuel tanks 410 then the transport refrigeration unit 22 may obtain power from the energy storage device 510. In another example, the supervisory management module 310 may be configured to control the recharging of the energy storage device from a charge station 386 based on the fuel tank parameters 430, the fuel cell parameters 440, refrigeration parameters 450, and/or energy storage parameters 522.

The supervisory management module 310 may be configured to directly control the fuel cell 400 through commands 470 and transmit commands 470 to control operation of the transport refrigeration unit 22, the fuel tanks 410, and/or the energy storage device 510 based on the fuel tank parameters 430, the fuel cell parameters 440, refrigeration parameters 450, and/or energy storage parameters 522. The commands 470 may include On-Off commands to the transport refrigeration unit 22 that turn on or shut off the transport refrigeration unit 22. The commands 470 may include power level commands from the controller 420 of the fuel cell 400 that depicts how much power is available from the fuel cell 400 and the controller 600 of the transport refrigeration unit 22 adjusts the electricity 460 being pulled by the transport refrigeration unit 22. The commands 470 may include On-Off commands to the fuel cell 400 that turn on or shut off the fuel cell 400. The supervisory management module 310 may receive information from the fuel cell 400 about up to how much power can be withdrawn from the fuel cell 400 and the fuel cell 400 may be configured to shut down when the transport refrigeration unit 22 is putting too much of a load on it. The commands 470 may include a valve position command to the fuel tank 410 that adjusts a position of the valve 419 of the fuel tank 410.

The transport refrigeration unit 200 may have its own thermal management system that enables a certain performance of the refrigeration loop. The fuel cell 400 and the energy storage device 510 may comprise a thermal management system that comprises a radiator, cooling pump, filters, and control valves to maintain both the fuel cell system and its power electronics and the energy storage device with its own power electronics within a desired temperature range, with the temperature of the energy storage device expected to be lower than the temperature of the fuel cell system.

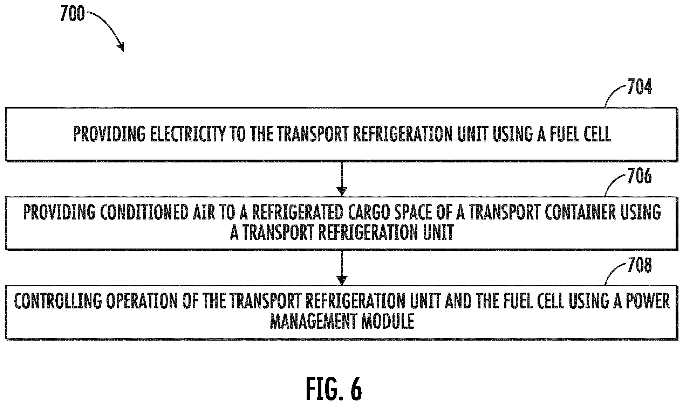

Referring now to FIG. 6, with continued reference to FIGS. 1 and 2. A flow process of a method 700 of operating a transport refrigeration system 200 is illustrated. The method 700 may be performed by the supervisory management module 310.

At block 704, electricity 460 is provided to the transport refrigeration unit 22 using a fuel cell 400. At block 706, conditioned air is provided to a refrigerated cargo space 119 of a transport container 106 using a transport refrigeration unit 22. At block 708, operation of the transport refrigeration unit 22 and the fuel cell 400 is controlled using a supervisory management module 310. Block 708 may include that operation of the transport refrigeration unit 22 and the fuel cell 400 is controlled using a supervisory management module 310 based on at least one of fuel cell parameters 440 from the fuel cell 400 or refrigeration parameters 450 from the transport refrigeration unit 22.

Block 708 may include that charging of the energy storage device 510 is controlled by the supervisory management module 310. The method 700 may also include turning off the fuel cell 400 when the transport refrigeration unit 22 is not requiring power any more as its setpoint has been reached.

The method 700 may further include that the supervisory management module 310 transmits commands 470 to at least one of the fuel cell 400 and the transport refrigeration unit 22. The supervisory management module 310 may be a hardware component that is in electronic communication with the fuel cell 400 and the transport refrigeration unit 22 through a wired or wireless connection.

The method 700 may also include that the supervisory management module 310 installed on the transport refrigeration unit 22 transmits commands 470 to the fuel cell 400. The supervisory management module 310 may be a software module that is installed on the transport refrigeration unit 22.

The method 700 may also include that the supervisory management module 310 installed on the fuel cell 400 transmits commands 470 to the transport refrigeration unit 22. The supervisory management module 310 may be a software module that is installed on the fuel cell 400.

The method 700 may further include that the electricity 460 from the fuel cell 400 is stored and provided to the transport refrigeration unit 22 using an energy storage device 510. The supervisory management module 310 may control the electricity 460 sent from the fuel cell 400 to the energy storage device 510 and the electricity 460 sent from the energy storage device 510 from the energy storage device 510 to the transport refrigeration unit 22.

The method 700 may also include that a fuel tank 410 stores fuel 480 and provides the fuel 480 to the fuel cell 400. The supervisory management module 310 controls a flow of the fuel 480 from the fuel tank 410 to the fuel cell 400 by controlling hydrogen fuel cell pressure to the fuel cell. The supervisory management module 310 controls a shutdown of the flow of fuel in case of a sudden pressure increase/decrease, accidents, or any other safety incident. The supervisory management module 310 may control operation of the transport refrigeration unit 22, fuel cell 400, and fuel tank 410, based on at least one of fuel cell parameters 440 from the fuel cell 400, refrigeration parameters 450 from the transport refrigeration unit 22, and fuel tank parameters 430 from the fuel tank 410.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention, as defined in the appended claims. In addition, many modifications may be made to adapt a particular situation or material to the teachings of the present invention without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. A transport refrigeration system (200) comprising:
a transport refrigeration unit (22) configured to provide conditioned air (138) to a refrigerated cargo space (119) of a transport container (106);
a fuel cell (400) configured to provide electricity (460) to the transport refrigeration unit (22); and
a supervisory management module (310) configured to control operation of the transport refrigeration unit (22) and the fuel cell (400).

2. The transport refrigeration system (200) of claim 1, wherein the supervisory management module (310) is configured to control operation of the transport refrigeration unit (22) and the fuel cell (400) based on at least one of fuel cell parameters (440) from the fuel cell (400) or refrigeration parameters (450) from the transport refrigeration unit (22).

3. The transport refrigeration system (200) of claim 1 or 2, wherein the supervisory management module (310) is a hardware component that is in electronic communication with the fuel cell (400) and the transport refrigeration unit (22) through a wired or wireless connection.

4. The transport refrigeration system (200) of claim 1 or 2, wherein the supervisory management module (310) is a software module that is installed on the transport refrigeration unit (22) or installed on the fuel cell (400).

5. The transport refrigeration system (200) of any preceding claim, further comprising:
an energy storage device (510) configured to store the electricity (460) from the fuel cell (400) and provide the electricity (460) to the transport refrigeration unit (22),
wherein the supervisory management module (310) is configured to control the electricity (460) sent from the fuel cell (400) to the energy storage device (510) and the electricity (460) sent from the energy storage device (510) to the transport refrigeration unit (22).

6. The transport refrigeration system (200) of any preceding claim, further comprising:
a fuel tank (410) configured to store fuel (480) and provide the fuel (480) to the fuel cell (400),
wherein the supervisory management module (310) is configured to control a mass flow or pressure of the fuel (480) from the fuel tank (410) to the fuel cell (400);
optionally wherein the supervisory management module (310) is configured to control operation of the transport refrigeration unit (22), the fuel cell (400), and the fuel tank (510), based on at least one of fuel cell parameters (440) from the fuel cell (400), refrigeration parameters (450) from the transport refrigeration unit (22), and fuel tank parameters (430) from the fuel tank (410).

7. A method (700) of operating a transport refrigeration system (200), the method comprising:
providing conditioned air (138) to a refrigerated cargo space (119) of a transport container (106) using a transport refrigeration unit (22);
providing electricity (460) to the transport refrigeration unit (22) using a fuel cell (400); and
controlling operation of the transport refrigeration unit (22) and the fuel cell (400) using a supervisory management module (310).

8. The method of claim 7, further comprising:
transmitting commands (470) from the supervisory management module (310) to at least one of the fuel cell (400) and the transport refrigeration unit (22),
wherein the supervisory management module (310) is a hardware component that is in electronic communication with the fuel cell (400) and the transport refrigeration unit (22) through a wired or wireless connection.

9. The method (700) of claim 7, further comprising:
transmitting commands (470) from the supervisory management module (310) installed on the transport refrigeration unit (22) to the fuel cell (400), wherein the supervisory management module (310) is a software module that is installed on the transport refrigeration unit (22); or
transmitting commands (470) from the supervisory management module (310) installed on the fuel cell (400) to the transport refrigeration unit (22), wherein the supervisory management module (310) is a software module that is installed on the fuel cell (400).

10. The method (700) of any of claims 7 to 9, further comprising:
storing the electricity (460) from the fuel cell (400) and providing the electricity (460) to the transport refrigeration unit (22) using an energy storage device (510); and
controlling, using the supervisory management module (310), the electricity (460) sent from the fuel cell (400) to the energy storage device (510) and the electricity (460)) sent from the energy storage device (510) to the transport refrigeration unit (22).

11. The method (700) of any of claims 7 to 10, further comprising:
storing fuel (480) and providing the fuel (480) to the fuel cell (400) using a fuel tank (410); and
controlling, using the supervisory management module (310), a mass flow and a pressure of the fuel (480) from the fuel tank (410) to the fuel cell (400); and
optionally controlling, using the supervisory management module (310), operation of the transport refrigeration unit (22), the fuel cell (400), and the fuel tank (410), based on at least one of fuel cell parameters (440) from the fuel cell (400), refrigeration parameters (450) from the transport refrigeration unit (22), and fuel tank parameters (430) from the fuel tank (410).

12. A computer program product tangibly embodied on a non-transitory computer readable medium, the computer program product including instructions that, when executed by a processor, cause the processor to perform operations comprising:
providing conditioned air (138) to a refrigerated cargo space (119) of a transport container (106) using a transport refrigeration unit (22);
providing electricity (460) to the transport refrigeration unit (22) using a fuel cell (400); and
controlling operation of the transport refrigeration unit (22) and the fuel cell (400) using a supervisory management module (310).

13. The computer program product of claim 12, wherein the operations further comprise:
transmitting commands (470) from the supervisory management module (310) to at least one of the fuel cell (400) and the transport refrigeration unit (22),
wherein the supervisory management module (310) is a hardware component that is in electronic communication with the fuel cell (22) and the transport refrigeration unit (400) through a wired or wireless connection.

14. The computer program product of claim 12, wherein the operations further comprise:
transmitting commands (470) from the supervisory management module (310) installed on the transport refrigeration unit (22) to the fuel cell (400),
wherein the supervisory management module (310) is a software module that is installed on the transport refrigeration unit (22).

15. The method (700) of any of claims 7 to 11 or the computer program product of any of claims 12 to 14, wherein controlling operation of the transport refrigeration unit (22) and the fuel cell (400) using the supervisory management module (310) further comprises:
controlling operation of the transport refrigeration unit (22) and the fuel cell (400) using the supervisory management module (310) based on at least one of fuel cell parameters (440) from the fuel cell (400) or refrigeration parameters (450) from the transport refrigeration unit (22).
